# EUROPEAN PATENT APPLICATION

(11) **EP 4 365 788 A1**
(43) Date of publication of application: **08.05.2024**
(21) Application number: 22205862.0
(22) Date of filing: 07.11.2022
(51) Int. Cl.: G06Q 10/04, G06Q 10/0633

(54) **AUTOMATIC DATA COVERAGE REDUCTION BASED ON GRAPH READABILITY**

(71) Applicant: Celonis SE, 80333 München (DE)
(72) Inventor: Thaler, Tom, 80333 München (DE); Swoboda, Andreas, 80333 München (DE); Hoch, Philipp, 80333 München (DE); van der Aalst, Wil, 80333 München (DE)
(74) Representative: 2s-ip Schramm Schneider Bertagnoll Patent- und Rechtsanwälte Part mbB

(57) **Abstract**

The present invention relates to a computer-implemented method to determine optimized single-entity process graphs from an entity-centric data model, and an optimized multi-entity process graph based on the optimized single-entity process graphs.

## Description

### Field of the invention

The present invention relates to a computer-implemented method to determine optimized single-entity process graphs from an entity-centric data model, and an optimized multi-entity process graph based on the optimized single-entity process graphs.

### Background of the invention

Processes are executed everywhere and any time. A process comprises a number of process steps and executing these process steps generates a process instance, also called case. As of today, many processes are monitored, wherein process steps are usually recorded with a number of properties.

Discovering process from the recorded process data is one of the most challenging process mining tasks. Traditionally, processes are discovered from single-case event logs, i.e., sequences of process steps which are assigned to a single process instance and ordered in sequence of their execution. The metrics to describe the quality of a discovery algorithm may depend for instance on the use case for which the process model is generated.

By definition, the process discovery algorithm is a function that maps an event log onto a process model such that the process model is "representative" for the behavior seen in the event log.

With introducing multi-entity data models to capture more realistic processes, the problem statement for process discovery is getting even more complex. The search space expanded in many dimensions since every entity introduces its own dimension, however, the entities itself may be related to one another.

Hence, it is not sufficient to apply state-of-the-art algorithms for process discovery directly onto multi-entity data models since these algorithms are optimized for single-case event logs and fail to capture optimizations of process models for interrelated entities.

### Object of the invention

It is therefore an object of the present invention to provide a computer-implemented method that enables the discovery of optimized process models from process data transformed into a multi-entity data model.

### Solution according to the invention

This object is solved by the computer-implemented method according to the independent claim. Further aspects of the invention and advantageous embodiments are specified in the dependent claims.

Accordingly, provided is a computer-implemented method to determine an optimized process graph representing process data. The process data is recorded during execution of processes, wherein each process is executed by executing a number of process steps. A number of entity instances participates in executing the number of process steps, wherein each entity instance is assigned to exactly one entity type and each process step is assigned to exactly one event type.

The method comprises:
- providing a subset of entity types from the recorded process data,
- determining at least one event type related to entity instances of the subset of entity types,
- determining at least two subsets of entity instances and their respective frequency from the subset of entity types on basis of corresponding event types,
- storing unions of the determined subsets of entity instances in a data structure in a storage device in a predefined order,
- determining a specific union of the stored unions of subsets of entity instances, wherein the specific union maximizes a predefined utility function, and
- generating the optimized process graph by generating a process graph from the specific union of subsets of entity instances.

The gist of the present invention is that the process model (or process graph, since the model is typically graph-based) is discovered not from the full set of entity instances assigned to the subset of entity types, but from a subset, namely the specific union which maximizes a predefined utility function.

In general, the problem of finding the specific subset from which an optimal process graph may be discovered is NP-hard. The approximation to this optimization problem according to the invention therefore introduces a predefined order according to which a smart choice of unions of subsets of entity instances is stored and a utility function that operates as a handle to optimize the selection of unions of subsets of entity instances over the set of entity instances.

The predefined order has the further advantage that subsets of entity instances may be flexibly added or removed from the predefined order, thereby adapting the search space to specific use cases.

In one embodiment, the at least two subsets of entity instances and their respective frequency are determined for each entity type separately, resulting in an optimized single-entity process graph.

Preferably, the method further comprises determining the specific union by determining a process graph for at least a subset of stored unions of subsets of entity instances by way of a process discovery algorithm. The utility function assigns a cost value to each process graph based on a tradeoff between at least two parameters out of a group of parameters, the group at least consisting of:
- a complexity of the process graph,
- a coverage of the process graph,
- a precision of the process graph,
- a generalization of the process graph, and
- combinations thereof.

The parameters of the group of parameters each qualify as a metric to quantify the quality of a discovered process graph. Hence, the utility function can be tuned such that the cost value reflects the sought quality criteria, in particular with respect to readability of the graph and its coverage of behavior seen in the event log.

Preferably, the utility function is maximized by determining a specific process graph to which the utility function assigns a cost value below a predefined cost value, wherein the specific process graph is the optimized process graph.

Preferably, the predefined utility function is parametrized. The method further comprises adapting, by way of an input of a user interface, at least one parameter of the predefined utility function on basis of which an adapted specific process graph is determined, and wherein the adapted specific process graph updates the optimized process graph.

Often, the best choice of the parameters defining the utility function, in particular their weighting relative to each other, is not know à-priori. For these cases, it is advantageous to generate an initial optimized multi-entity process graph and provide the user a handle to refine the multi-entity process graph further.

Preferably, the method further comprises:
- selecting a subset of event types from the recorded process data, and
- determining the at least one event type on basis of the selected subset of event types.

The event types related to the provided subset of entity types may be determined more efficiently, if the set of event types is already reduced to a selected subset.

Preferably, the predefined order is an order of decreasing frequency of the determined subsets.

This feature provides a simple rule for prioritizing the subsets of entity instances in order to structure the search for the subset of entity instances from which an optimized single-entity process graph may be discovered. In particular, the frequency of a determined subset may be directly returned from a clustering of the entity instances into the respective subsets. Hence, the determined subsets of entity instances may be efficiently ordered for further processing.

Preferably, the at least two subsets comprising entity instances and respective event types are determined using a clustering algorithm.

Repeated executions of processes results in many entity instances that overlap exactly. Hence, the dataset of entity instances may be effectively reduced by clustering similar, in particular identical, entity instances into subsets of entity instance, subsequently also referred to as variants.

In one embodiment, the specific union of subsets of entity instances is determined using a direct line search algorithm.

Preferably, the direct line search algorithm is a binary search algorithm or a golden-section search algorithm.

Resorting to a direct line search algorithm has the advantage that discovering the process graph, which is computationally expensive, is not required for every union of subsets of entity instances but only for a subset of unions to subsets of entity instances.

In one embodiment, the specific union of subsets of entity instances is filtered on process steps thereby eliminating process steps without respective entity instance.

Hence, the dataset for which an optimized process graph is to be determined may be further reduced before discovering process graphs.

Preferably, the specific union of subsets of entity instances is extended by related entity instances.

Entity types, and their respective entity instances may be related to one another in the entity-centric data model. Hence, the subset of entity instances provided within the first steps of the method according to the invention may not be self-contained, meaning that some entity types of the provide subset may be related to other entity types that are not comprises in the provided subset. In order to capture the behavior of the multi-entity data model as well as possible, the entity instances related to the entity instances assigned to entity types of the provided subset are taken into account.

Preferably, the data structure is a linear data structure, in particular an array, in which the subsets of entity instances are stored according to the predefined order.

This feature has the advantage that the unions of subsets of entity instances may be constructed by iterating through the array and adding, for each element in the array, the subset of entity instances stored in the respective element to the union of subsets of entity instances constructed from the subsets of entity instances stored in the respective preceding elements of the array. In other words, the i-th union is just comprised of the first i subsets of entity instances in said array.

Relational database systems are ideally suited for representing multi-entity data models and their one-to-many and many-to-many relationships between entity types and event types.

In one embodiment, the method further comprises determining, for each subset of entity instances, a weight. The predefined order is then determined by finding a union of subsets of entity instances having minimal weight and covering a universe of corresponding event types. The subsets of entity instances of the union are each assigned highest priority. Each other subset of entity instances is assigned a decreasing priority value with increasing distance to the union and decreasing frequency in the recorded process data.

Preferably, the weight of each subset of entity instances is inversely proportional to the frequency of the respective subset of entity instances in the recorded process data.

This embodiment has the advantage that also rare entity instances may be part of the discovered process graph, as they are no longer systematically overlooked due to their low frequency value.

In one embodiment, the method further comprises determining the optimized process graph for each provided entity type and related event type separately and merging the determined optimized process graphs into a single optimized multi-entity process graph.

### Short summary of the figures

Some embodiments of the invention are described in further detail in combination with the figures, which show:
- Fig. 1: a flow chart providing an overview over determining an optimized multiobject process graph;
- Fig. 2: a flow chart summarizing the method steps to determine an optimized single-entity process graph;
- Fig. 3: a schematic summarizing the method steps to determine an optimized single-entity process graph;
- Fig. 4: a schematic of a first algorithm to determine an incremental event log for determining the optimized single-entity process graph;
- Fig. 5: a schematic of a second algorithm to determine the incremental event log for determining the optimized single-entity process graph;
- Fig. 6: a schematic of a slider functionality for the utility function; and
- Fig. 7: a graph layout for a multi-entity process graph.

### Detailed description of the invention

Process discovery is one of the core areas of process mining and still a very active area of research. The discipline of process discovery provides algorithms which aim at discovering the "best", i.e., an optimized process model, given an event log. An event log traditionally comprises a sequence of process steps which are assigned to a single process instance, also called case. Discovering optimized process models from event logs plays a crucial role in process mining applications as it enables to uncover the core of a process.

The quality of a discovered process model may be quantified by a number of metrics, such as the precision, the fitness, the generalization, the coverage, the complexity, etc. Which metric to choose and their interpretation may depend on the use case for which the optimized process model is generated.

It was found, however, that realistic processes often comprise one-to-many relationships and many-to-many relationships between process steps and entity instances participating in the process steps. To generate easy-to-use data models for real-world processes, the notion of a single process instance was abandoned and replaced by a notion of multiple entity instances, also referred to as object instances, which may be related to each other and to event instances. With the introduction of object-centric process mining, the problem statement for process discovery, however, is getting more complex, as the final process model consists of multiple individual process models, which are overlaid at certain points.

It is not enough to adapt an existing process discovery algorithm to determine an optimized multi-object process model; rather, the present invention provides a method that aims to optimize a set of interrelated process models in a way that the core parts of the to-be-discovered process are retained, while other parts are filtered out for better readability and intelligibility.

A process model in the context of the present invention is characterized by a graph-based layout in which the process graph relates the object instance and event instances. Subsequently, the terms process model and process graph are therefore used interchangeably.

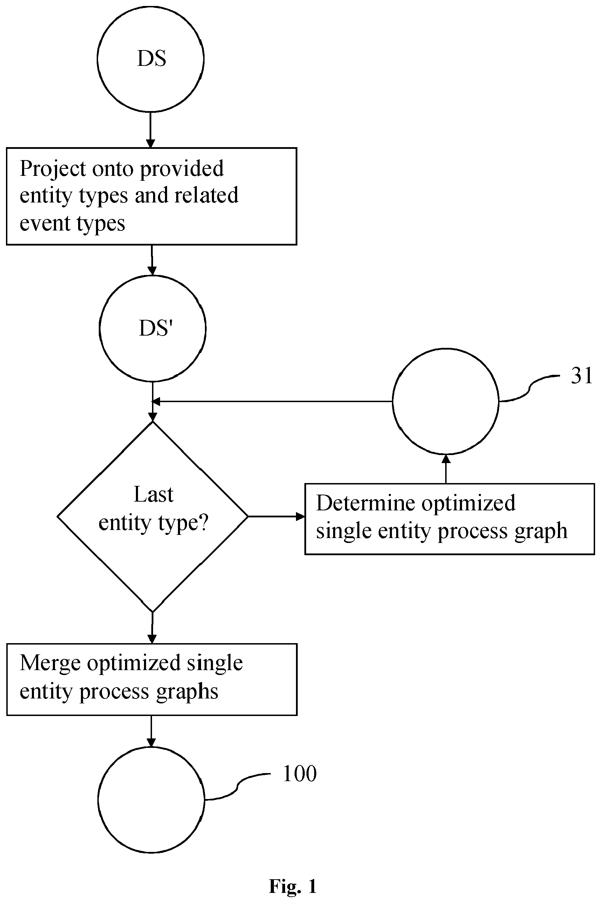

**Fig. 1** shows a flow chart providing an overview over determining an optimized multi-object process graph.

An object-centric event log DS comprising a multiple entity types and event types which may be extracted and transformed from raw data of at least one external computer system is reduced into a smaller dataset DS'. The reduced dataset DS' is determined by projecting the object-centric event log DS onto a subset of provided entity types and the event types which are related to the provided entity types, wherein the set of event types may be further reduced to a provided subset of event types. The resulting dataset DS' therefore also is an object-centric event log comprising the provided entity types and related event types. The object-centric event log is a sequence of process steps or activities, wherein each process step is attributed to one or more entity instances, wherein each entity instance is assigned to exactly one entity type.

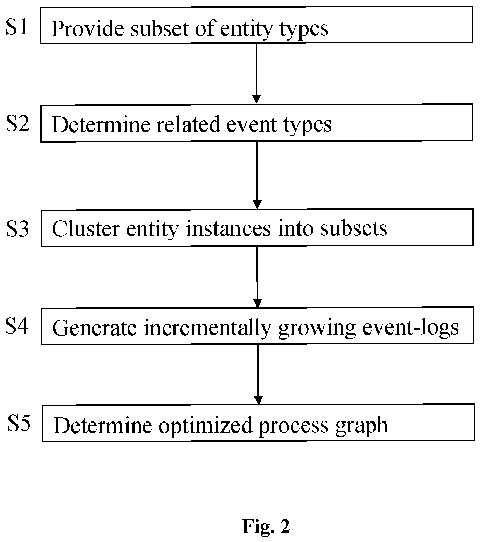

Next, for each entity type comprised in the reduced dataset DS', a single entity process graph is determined separately. The single entity process graph is determined only based on a subset of entity instances of each entity type, wherein the subset of entity instances is determined to optimize the single entity process graph discovered from it. Determining the respective subset of entity instances is explained in more detail with respect to the Figs. 2 to 5.

In a last method step, the optimized single entity process graphs are merged into a single multi-entity process graph. Hence, the resulting multi-entity process graph, subsequently also termed multi-object process graph, covers the core behavior of the originally provided object-centric event log DS.

**Fig. 2** shows a flow chart summarizing the method steps to determine an optimized single-entity process graph.

The object-centric event log fuels a data model which comprises a number of object types and a number of event types. Preferably, each of the object types and of the event types represents a schema of a database table in a relational database model. From the recorded process data, which is usually stored in external computer systems, a number of object instances is determined, wherein each object instance is assigned to exactly one object type. Preferably, the object instances are stored in the rows of the database table of the respective object type. Similarly, a number of event instances is determined, either from recorded changes or from the object instances, and preferably stored in the rows of the database table of the respective event type. Each event instance is assigned to exactly one event type. Between the object types, object-to-object relationships are determined. Further, the event instances of an event type may be related to object instances of an object type by event-to-object relationships.

In a first step, S1, a subset of entity types (or object types) of an obj ect-centric data model is provided. Note that a typical object-centric data model generated for real-world processes such as accounts payable, accounts receivable, in air traffic control, in product manufacturing, hiring process, retail processes, in logistics, and so on, comprise a range starting from a few entity types to more than a thousand entity types. The subset of entity types may be provided manually, or, particularly for standardized processes, in an at least partially automated way.

In a second step, S2, the event types related to the subset of entity types are determined. The event types related to specific entity types may be determined based on the event-to-object relationships of the object-centric data model. The determined event types form a subset of the event types of the object-centric data model, wherein said subset of event types may be restricted further to a subset of event types provided manually.

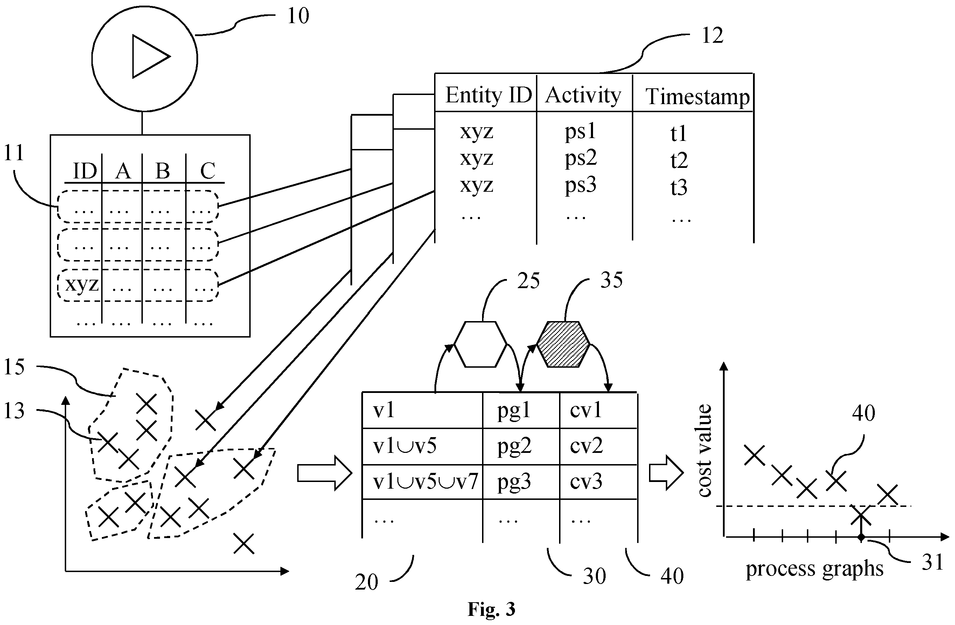

In a third step, S3, the entity instances assigned to entity types of the provided subset of entity instances are clustered into subsets of entity instances, or subset of object instances. In other words, a number of entity instance variants are determined using a clustering algorithm, wherein each entity instance of the subset of entity instances is either assigned to exactly one entity instance variant or classified as noise. As a result, each determined subset of entity instances is reduced to a single entity instance variant, wherein the size of the subset determines the frequency of the respective entity instance variant in the data model. The third step is described in more detail with respect to Fig. 3.

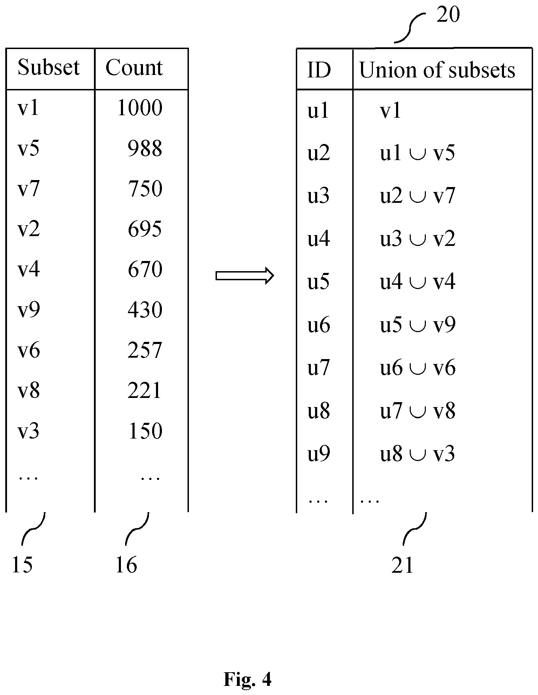

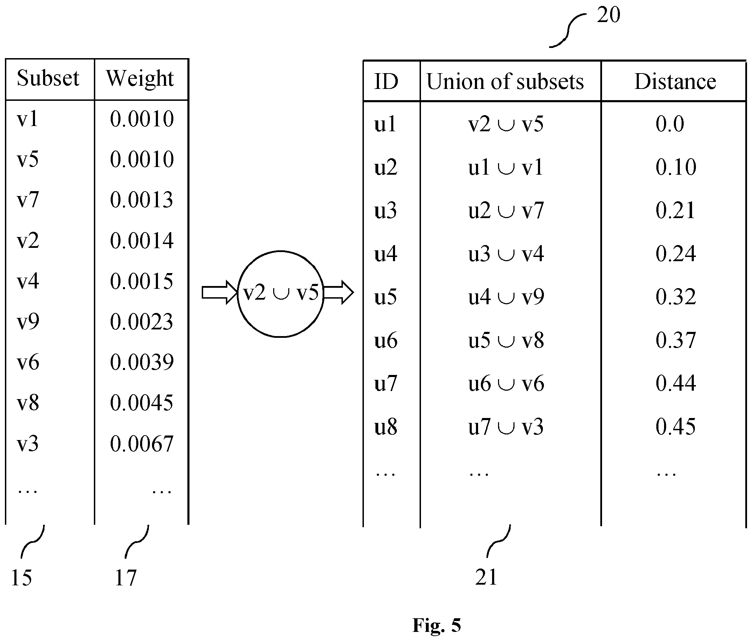

In a fourth step, S4, a list of incrementally growing event logs is generated. Each entity instance variant may be represented by a single entity event log. Every entry of the list stores a union of the previous subset of event instances, i.e., entity instance variant, with a further subset of event instances which is determined according to a predefined order. The predefined order is described in more detail with respect to Figs. 4 and 5.

In other words, the first event log in the list only consists of the first entity instance variant, the second event log consists of the first and the second entity instance variant, the third event log consists of the first three entity instance variants, etc. This concept of incrementally growing event logs, or incremental event logs in short, can be used to add or remove data (entity instance variants) at minimal cost. The more entity instance variants are combined into a dataset, the more complex a process model discovered from the dataset tends to be. On the other hand, the first variant alone may not cover much of the object instances assigned to the provided object types.

In a fifth step, S5, the optimized process graph is determined by discovering a process graph for each entry of the list of incrementally growing event logs, assigning each process graph a cost value by way of a utility function, and locating the first process graph of which the assigned cost value is below a predefined cost value threshold. The fifth step is also further described with respect to Fig. 3.

The utility function is defined based on a number of parameters such as a complexity or simplicity of the discovered process graph, a coverage of the discovered process graph, a precision of the discovered process graph, a fitness of the discovered process graph and/or a generalization of the discovered process graph.

These parameters provide competing quality criteria that aim at fully characterizing a discovered process graph.

In this context, the fitness quantifies the extent to which the discovered process graph may accurately reproduce the behavior seen in the event log DS'. The coverage quantifies the proportion of the entity instances of the event log DS' which are covered by the discovered process graph. The precision quantifies the proportion of the behavior represented by the discovered process graph to the behavior represented by the reminder of the subset of entity types. Process graphs having a sufficiently large precision are not underfitting the event log DS'. The generalization quantifies the extent to which the discovered process graph will be able to reproduce future behavior of the process and may be interpreted as a measure of confidence in the precision. Process graphs having a sufficiently large generalization are not overfitting the event log DS'. The complexity, or its opposite, simplicity, quantifies the readability of the discovered process model.

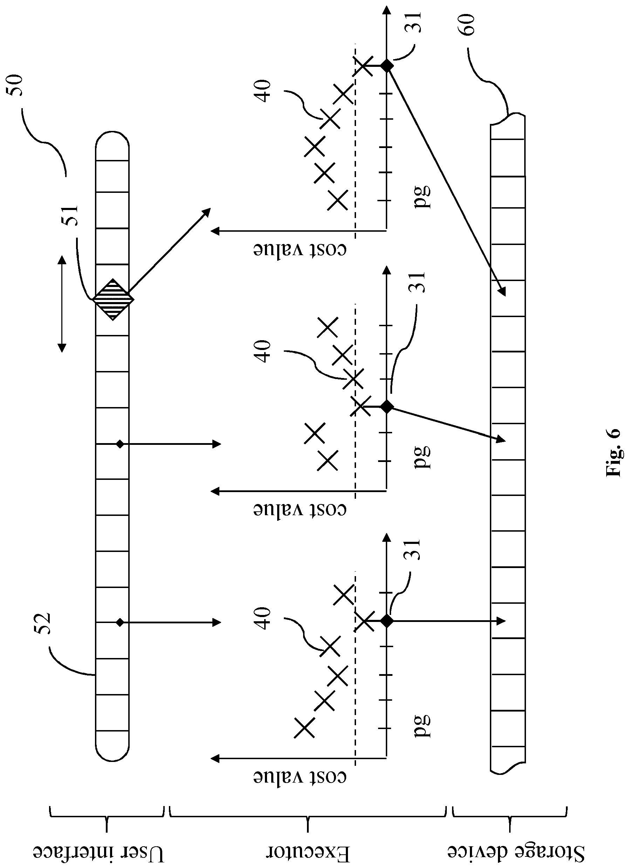

The cost value is determined by computing a tradeoff between at least two of the parameters introduced above, e.g., the complexity and the coverage. The tradeoff may be characterized as a weighted sum of the parameters. The weighted sum may be realized by assigning a weighting parameter to each parameter. In case the utility function computes a tradeoff between only two parameters, a single weighting parameter that attaches a relative weight to one parameter relative to the other parameter may be sufficient. The weighting parameters may be adapted by way of a slider input in order to fully interact with the model, such that parts of the process that are initially filtered out to make the process more easily understood may be phased in "step-by-step" at the user's discretion and depending on an underlying use case. The technical features required to realize a slider for single-entity process discoveries from entity-centric data models are described further with respect to Fig. 6.

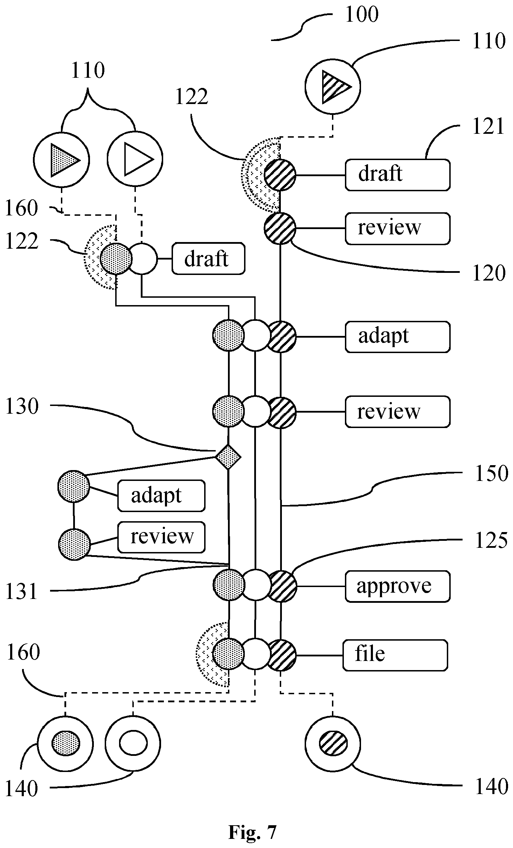

With merging each of the discovered single-entity process model, the resulting multi-entity process graph may be provided to a process mining application to quantify key performance indicators for the process graph and its components and/or to visualize the process graph using an interactive graph layout as described further with respect to Fig. 7.

**Fig. 3** shows a schematic summarizing the method steps to determine an optimized single-entity process graph.

The method steps of Fig. 3 are executed for each entity type 10 of the reduced entity-centric event log DS'. The entity type 10 is represented as a schema definition, which in this example comprises the attributes "ID", "A", "B", and "C". The database table defined by the entity type 10 is populated with a number of entity instances 11. Each entity instance 11 is depicted by a dashed-lined rectangle having rounded corners in Fig. 3.

Technically, an entity instance 11 may be represented by an event log 12 or process protocol, in which the case identifier is replaced by the entity instance identifier. The corresponding event log therefore is a single-entity instance event log 12.

In Fig. 3, the single-entity instance event log 12 is sketched by a table having the attributes "Entity ID", "Activity" and "Timestamp". The "Activity" attribute may be filled from data being stored in the attributes of the respective entity type and/or from entity processing steps, i.e., event instances which are linked to the respective entity instance. In Fig. 3, "ps1", "ps2", and "ps3" represent exemplary entity processing steps. The "Timestamp" attribute provides an order of the entity processing steps or activities, the order being represented, e.g., by Unix timestamps or similar, represented by "t1", "t2" and "t3" in Fig. 3.

Since the number of entity instances 11 for a given entity type 10 may be very large, the individual event logs 12 are clustered into subsets, wherein each subset of entity instances 15 is reduced to an entity instance variant, or variant in short. Clustering of entity instances 11 therefore effectively reduces the number of entity instances 11 to consider further dramatically.

The clustering is based on set similarity joins and enhancements thereof for large-scale scenarios. In short, each single entity instance event log 12 is represented as a set 13, wherein each set 13 comprises a number of tokens, wherein each token may represent a transition between two entity processing steps or activities. For each set, other sets are considered as similar if a predefined distance function returns a respective distance value below a predefined distance value. Sets that are not assigned to any of the found clusters, so-called noise sets, may be discarded or treated as individual variants.

The subset of entity instances 15, also called entity instance variants 15 or variants 15 in short, are further referred to v1, v2, v3, v4, v5, v6, v7, v8, v9 in the current example.

The number of variants 15 depends on the nature of the recorded processes and on the size of the initially provided subset of entity types 10 and may range from a few dozen to hundreds or even thousands.

With clustering the entity instances 11 into variants 15, the further challenge translates to discovering an optimized (single-entity) process graph that captures as much behavior of the identified variants while remaining simple enough to be easily readable by a broad audience trying to draw data-driven conclusions from the discovered process graph.

It was found that the crucial step for determining the optimal single-entity process graph 31 is to determine a subset of the overall variants 15 assigned to a given entity type from which the optimal single-entity process graph 31 may be discovered. By selecting subsets of entity instances 15 or variants 15, the method trades off coverage and the ability to capture the core behavior of the event-log with simplicity, precision, and generalizability of the process model. The tradeoff may be represented by a utility function 35, which is optimized over the subset of variants 15. However, it is in general not feasible to compute this optimum exactly as the problem is NP-hard. Hence, the optimal single-entity process graph 31 is approximated.

Structuring the search space in this optimization problem, i.e., the combinations of variants in the subset of variants, into a predefined order reduces the search space significantly thus enabling to approximate the optimal process model 31. The predefined order may be determined by different methods, of which two methods are discussed with respect to Figs. 4 and 5.

The predefined order may be an order of a list of incrementally growing event logs 20. "Incrementally growing" refers to the number of variants 15 in the resulting event logs when iterating over the single variants 15 stored according to the predefined order and adding each variant 15 to an event log comprising the variants having higher priority. In other words, each entry in the predefined order stores a single variant according to its priority in decreasing order of priority. The unions of subsets of entity instances 21, i.e., combinations of variants 21 may be simply determined by iterating over the data structure and constructing an event log that comprises the variant 15 stored in the current entry of the data structure and all variants 15 stored in the respective preceding entries of the data structure. The respective event logs are generated from the combination of variants 21, i.e., a union of the subsets of entity instances 21 determined by the clustering.

For at least a subset of entries of the list of incrementally growing event logs 20, a process model 30 is discovered using a process discovery algorithm 25, such as for instance inductive miner. The process discovery algorithm 25 is a function that maps an event log onto a process model in a way that the resulting process model represents the behavior seen in the event log.

With discovering a process model 30 for the subset of entries of the list of incrementally growing event logs 20, a list of candidate process models results, wherein each process model 30 is a candidate for the optimal process model 31 representing the entity instances assigned to the respective single entity type in the reduced event log DS'. To approximate to the optimal single-entity process model 31, each process model 30 is assigned a cost value 40 by a utility function 35 according to the fourth step S4 of Fig. 2.

The utility function 35 maps a process model 30 onto a cost value 40, wherein both desirable factors (e.g. fitness, precision) and undesirable factors (e.g. complexity) contribute to the cost value 40. The utility function thus discriminates between the process models 30 based on their utility. A low cost value indicates a high utility of a process model 30, whereas a high cost value indicates the opposite thereof. The utility function 35 may be, for instance, simply defined by the difference between the sum of all undesirable factors and the sum of all desirable factors.

The process graphs 30 are thus mapped onto a landscape of cost values. Depending on the number of variants 15, many process graphs 30 may be discovered and quantified by its cost value 40. In one embodiment, the first process graph to which a cost value 40 is assigned which is below a predefined threshold, may be identified as the optimized process graph 31. The optimized process graph 31 corresponds to a specific union of subsets of entity instances, i.e., a specific combination of variants. In Fig. 3, the predefined threshold is indicated by the horizontal dashed line in the bottom right panel.

The utility function 35 may be tuned to turn towards minus infinity if the undesired factors (e.g. complexity) dominate. In these cases, a bisection algorithm to compute the optimized process model 31 is used preferably.

For other utility functions 35, the use of a golden section search is preferred.

Given the list of incrementally growing event logs 20, the optimization problem boils down to a search on the list of incrementally growing event logs 20. Further assuming that growing the event log monotonously improves coverage, but adversely affects simplicity, precision, and generalizability, the problem simplifies to a binary search, which can be computed even more efficiently.

**Fig. 4** shows a schematic of a first algorithm to determine an incremental event log for determining the optimized multi-object process graph.

The illustration of Fig. 4 focuses on the method step according to which the list of incrementally growing event logs 20 is generated, step S4. The first algorithm determines the predefined order of the unions of subsets of entity instances 21 based on a frequency 16 of each subset of entity instances 15 or variant 15. In the example of Fig.4, each subset 15 is assigned a count value representing its frequency of occurrence in the provided subset of entity types 10.

In this example, the individual variants 15 are ordered by decreasing frequency 16, i.e., the variant occurring most frequently is assigned to the first entry of the list of incrementally growing event logs 20.

Accordingly, in the first entry of the list of incrementally growing event logs 20, the event log of the most frequent variant is stored. In the second entry of the list of incrementally growing event logs 20, a combination of the variant stored in the preceding entry and the variant occurring second most frequently in the provided subset of entity types is stored. In the third entry of the list of incrementally growing event logs 20, a combination of the variants stored in the preceding entry and the variant occurring third most frequently in the provided subset of entity types is stored. And so on. Each entry of the list of incrementally growing event logs 20 therefore comprises a larger subset of the overall entity instances assigned to the provided subset of entity types 15 than the respective preceding entry.

The first algorithm assumes that the utility function 35 applied to the incrementally growing event log is a unimodal function, such that the optimum may be efficiently found using a direct line search. This assumption may cover data sets for which the complexity of the discovered process models is unimodal, i.e., first increasing for adding less frequent variants and then decreasing in the overfitting regime. Hence, a combination of less frequent variants rather indicates that complex process graphs may be discovered from the respective event log, whereas a combination of high frequent variants tends to indicate that the respective event log may be sufficiently represented by the discovered process graph 30.

In one embodiment, this assumption may be relaxed further by requiring the utility function 35 to just behave nice enough in the sense that a sufficiently good approximation of its maximum may be found efficiently with one of the direct line search algorithms.

In the list of incrementally growing event logs 20, a linear process model 30 is generated from the event log stored in the first entry since the event log comprises only the most frequent variant. With adding less frequent variants to the respective event logs that are stored in successive entries, gradually more complex process graphs 30 may be discovered.

The coverage of the respective process graphs 30, however, shows the opposite trend. That is, the linear process graph discovered from the single event log stored in the first entry of the list of incrementally growing event logs 20 has worst coverage of the overall entity instances. The coverage gradually improves by adding more variants to the respective event logs that are stored in successive entries.

As a result, the landscape of cost values 40 with respect to discovered process graphs 30 is smoothened by the predefined order as determined according to the first algorithm resulting in more stable approximations of the optimized single entity process graph 31.

**Fig. 5** shows a schematic of a second algorithm to determine the incremental event log for determining the optimized multi-object process graph.

Similar to Fig. 4, the illustration of Fig. 5 focuses on the method step according to which the list of incrementally growing event log 20 is generated, step S4. The second algorithm determines the predefined order of the unions of subsets of entity instances based on a weight 17 of each subset of entity instances 15 or variant 15. In the example of Fig.5, each subset 15 is assigned a weight 17 that is determined from the inverse of the respective count value of Fig.4.

A variant 15 may be interpreted as the set of event types that it contains, wherein the second algorithm comprises assigning each variant 15 a weight 17 that is inversely proportional to its frequency 16 in the reduced event log DS'. Given the set of event types related to the provided entity types, the weighted set cover problem may be defined as follows: Determine the cover of the set of event types, i.e., a set of variants that contains all event types in the set of event types, the set of variants having the minimal weight. The variants 15 in this minimal cover are assigned the highest priority, i.e. are stored in the first entries of the list of incrementally growing event logs 20. All other variants 15 are ordered by their distance ("similarity") to the minimal cover, and their frequency.

In Fig. 5, the minimal cover is given by variant v2 in combination with variant v5. This combination of variants is stored in the first entry of the list of incrementally growing event logs 20. The variant v1 is determined to have the least distance to the minimal cover and is therefore combined with the minimal cover in the second entry of the list. The further variants are combined with the event log of the respective preceding entry accordingly.

The second algorithm has the advantage over a frequency-based ordering of the variants that the likelihood for rare event types to be represented in the discovered process graphs 30 increases.

Additionally, since the user can also select event types she is interested in, this approach has the advantage that the presence of all of the selected event types may be enforced in the optimized process model 31, which may be more intuitive than having some of them not appear despite being selected, just because they only appear infrequently.

**Fig. 6** shows a schematic of a slider functionality for the utility function.

For the illustration of Fig. 6 a parametrized utility function 35 is assumed. The parametrized utility function 35 enables manual input of weighting parameter values, by which the behavior of the cost function may be tuned.

As described above with respect to Fig. 2, the tradeoff between the competing quality criteria characterizing a discovered process graph 30 may be embodied as a weighted sum of the parameters. The weighted sum may be realized by assigning a weighting parameter 51 to each parameter.

For simplicity, Fig. 6 considers the case according to which the utility function 35 computes a tradeoff between only two parameters, such that a single weighting parameter 51 that attaches a relative weight to one parameter relative to the other parameter may be sufficient.

The single weighting parameter 51 is input by way of a slider 50 of a user interface. The slider 50 provides a manually selected value to the executor based on which the executor defines the utility function 35. For each definition of the utility function 35, the executor may determine a different cost-value landscape, of which three examples are illustrated by the diagrams in Fig. 6. The list of incrementally growing event logs 20 may be independent of the input of the weighting parameters, since the list of incrementally growing event logs 20 is purely determined based on inherent characteristics of the variants 15 in the reduced dataset DS', such as their frequency 16 or their distance to a minimal cover.

For each cost-value landscape, a respective optimal process graph 31 is determined. As illustrated by the three examples of Fig. 6, different combinations of variants 21 in the list of incrementally growing event logs 20 may lead to the discovery of the optimized process graph 31 with respect to the slider input 50.

In the case of a single weighting parameter input 50, the optimized single-entity process graph 31 may be predetermined for each value within the range 52 specified by the slider 50, and for each entity type 10 of the dataset DS'. The predetermined optimized process graphs 31 may be stored in a storage device 60. Accordingly, the resulting multi-entity process graph 100, which is determined by merging the respective optimized single-entity process graphs 31, may be predetermined for each weighting parameter input 50 and stored in the storage device 60. As a result, a sliding between multi-entity process graphs 100 at the user's discretion within the given quality coordinates may be emulated by a simple look-up.

In the case of several weighting parameter inputs 50, precomputing the optimized single-entity process graphs 31 easily becomes computationally too complex. However, a lazy computation scheme may be used to efficiently precompute single-entity process graphs 31 and the resulting multi-entity process graph 100 in order to allow sliding between weighting parameter inputs within a reasonable response time.

**Fig. 7** shows a graph layout for a multi-object process graph.

Having determined an optimized multi-entity process graph 100 representing the behavior of an object-centric event log sufficiently well, a further challenge remains: representing the process graph 100 in a way that the user may easily read and understand the process. Note that each entity type 10 comprised in the multi-entity process graphs 100 may span its own dimension, resulting in a multi-dimensional graph structure.

The layout of the graph structure of Fig. 7 used to represent a multi-entity process graph 100 is based on a simplified example. The example covers a part of the process "Applying for a patent", in which entity instances of a first entity type " Set of claims", a second entity type "Description" and a third entity type " Set of figures" participate.

The core elements of the graph structure are entity instances, entity processing steps, gateways and entity flows.

The entity types of the entity instances in the present example are related to each other in a sense that they belong to the same process, namely the set of claims, the description and the set of figures all form part of the patent application.

For each entity type, the graph layout represents an entity flow which originates from an entity initialization node 110 and terminates at an entity termination node 140. In between, the entity type is processed by a number of entity processing nodes°120.

Each entity instance is assigned to exactly one entity type. In Fig. 7, the three entity types are distinguished by a different shading of their nodes 110; 120; 130; 140, with diagonally hatched symbols corresponding to the set of claims, open symbols corresponding to the set of figures and dotted symbols corresponding to the description. In other embodiments, the entity types are distinguished by a different color of their nodes 110; 120; 130; 140 and corresponding directed edges 150; 160. In the following, the entity instance assigned to an entity type may also be referred to as entity.

The lifecycle of each entity instance starts with an entity initialization, follows a number of entity processing steps and terminates at an entity termination.

Each entity initialization is represented by a first node 110, also called initialization node 110. The initialization node 110 is represented in Fig. 7 by a circle surrounding a triangle in the form of a play-button icon, wherein the triangle is optional in some embodiments. The initialization node 110 comprises an interface to a first data structure (not shown), in which the entity instances are stored. The first data structure may preferably be a database table of a relational database, of which the schema is defined at least partially by the related entity type. Counting the number of entity instances stored in the first data structure therefore determines the respective entity initialization count, which may be queried via the interface and visualized by a number display next to the respective first node. Further, the entity type of the entity instances stored in the first data structure may be represented by its label next to the respective first node. The first node may be selectable thereby enabling a visual analysis of the entity instances stored in the first data structure and its relationships throughout the graph layout.

Each entity processing step is represented by a second node 120, also called processing node 120. The entity processing step comprises an event type and a relation between event instances of the respective event type with entity instances of a respective entity type. Thus, the processing node 120 in Fig. 7 is represented by a circle representing the relation between event instances and entity instances, wherein a rounded rectangle 121 representing the corresponding event type or activity is connected to the circle. The circle of the processing node representation may be shaded according to the respective entity type. Note that the event type is defined by at least one attribute, in which at least the label of the corresponding event or activity or process step is stored.

The second node 120 comprises an interface to a second data structure, in particular a database table of a relational database. In the records of the second data structure, event instances of the respective event type are stored in relation to the respective entity instance. In particular, the second data structure comprises at least three attributes, in which an identifier of the respective entity, a label of the process step and an order of the process step within the sequence of process steps involving the respective entity instance. Preferably, the order is implemented by storing the timestamp at which the process step is executed. By way of the interface, filters and aggregations may be applied in real-time to the underlying entity-centric data model which enables, e.g., to determine a count of event instances, which may be represented as a number or even by way of a visual diagram.

In the example of Fig. 7, the process step "Draft" creates a new entity instance of the type "Set of claims" and may also create new entity instances of the types "Set of figures" and "Description". The process step "Adapt" may adapt entities of each type essentially at the same time.

In this simple example, each process step ("Draft", "Review", "Adapt", "Approve", "File") may process entity instances of each of the entity types, often at the same time. A process step processing two entity instances of two entity types at essentially the same time is in a one-to-many relationship to these entity instances. A process step processing an entity instance multiple times, so that multiple entity instances of a different entity type are created, is in a many-to-many relationship to the involved entity instances. Other examples include process steps that are in a one-to-one relationship to an entity instance, such as the process step "Create Sales Order" creates exactly one "Sales Order". Other process steps may be in a zero-to-many relationships, such as the process step "Create Sales Order considers one or several entity instances of the type "Quotation", if available.

In other words, the second data structure stores information on the relationships between event instances of the respective event type and entity instances of the respective entity type, i.e., on instance level.

In case that entity instances of multiple entity types are processed by the same process step at essentially the same time, the respective entity processing steps are merged, resulting in merged second nodes 125.

The count of event instances assigned to a respective event type may be presented as a number display within the rounded rectangle 121 just underneath the event type. Such a representation summarizes at one glance, how many event instances were recorded on the respective entity type. This indication may be particularly useful in case of parallel process path, such that the distribution of entity processing steps among the different process paths may be quickly perceived.

Further, the count of event instances may be indicated by a wave display 122 that is attached to the shaded circle representing the relation of event instances to entity instances of the entity processing step. A wave count 122 is illustrated in the example of Fig. 7 for the event types "Draft" and "File". The wave count 122 scales with the number of event instances and therefore enables a direct comparison between the event instances of different event types. For instance, there are more instances of type "Set of claims" drafted according to Fig. 7 than instances of type "Description", which may relate to abandoned claims before drafting a corresponding description. Similarly, the wave count 122 for the merged processing step "File set of claims, description and figures" is smaller than the wave count of the processing step "Draft set of claims".

The initialization node 110 and the first processing node in the order of processing nodes for a respective entity type are connected by a second directed edge 160, which are represented by dashed lines in Fig. 7. Each second directed edge 160 comprises an interface to the edge data structure in which an identifier of each corresponding entity instance and an identifier of each corresponding event instance of the first entity processing step in the order of corresponding entity processing steps are stored. The number of records in the edge data structure connected to the second directed edge 160 corresponds to the count of entity initializations.

Similarly, the second nodes for a respective entity type are connected to each other along the order of processing steps by a number of directed first edges 150, which are represented by solid lines in Fig. 7. Each first directed edge 150 comprises an interface to an edge data structure, in which an identifier of each corresponding entity instance, an identifier of each corresponding event instance assigned to a second start node and an identifier of each corresponding event instance assigned to a second end node are stored, wherein each first directed edge 150 represents an entity flow being defined as a transition between two entity processing steps of which the corresponding process steps are recorded in direct succession in the process data. The number of records in the edge data structure connected to the first directed edge corresponds to the number of entity instances being processed according to the respective transition.

Each entity termination is represented by a fourth node 140, also called termination node 140. In Fig. 7, the termination node 140 is represented by a circle shaded according to the respective entity type, wherein the shaded circle is surrounded by a further concentric circle. Each termination node 140 comprises an interface to a fourth data structure in which the corresponding entity instances are stored and which essentially corresponds to the first data structure. Counting the number of entity instances stored in the fourth data structure determines the respective entity termination count, which may be queried via the interface and visualized by a number display next to the respective termination node 140.

Each termination node is connected to the respective last processing node in the sequence of processing steps for a respective entity type by a third direct edge, which essentially corresponds to the second directed edge 160. Each third directed edge comprises an interface to the edge data structure, in which an identifier of each corresponding entity instance and an identifier of each event instances of the last entity processing step in the order of corresponding entity processing steps are stored. The number of records in the edge data structure connected to the third directed edge corresponds to the count of entity terminations.

Often, entity instances may be processed according to two or more parallel entity processing steps or entity flows. In Fig. 7, e.g., some descriptions may be directly approved after a review, others may need to be adapted and reviewed once more before being approved. To capture parallel process paths in the graph layout, third nodes 130 representing gateways are generated, also called gateway nodes 130. Gateways split or join the entity flow, wherein exclusive and parallel behavior is represented differently. Exclusive gateways describe a behavior according to which the respective entity instance is processed by exactly one incoming and/or outgoing entity flow. Parallel gateways describe a behavior according to which the respective entity instance is processed by all incoming and/or all outgoing entity flows. A gateway node 130 is always related to exactly one entity type 10. The example of Fig. 7 comprises one exclusive split gateway node, visualized by a diamond. Further, the example of Fig. 7 comprises one exclusive join gateway 131, which is indicated by one entity flow merging in another.

It has been found useful to visualize the entity flows, i.e., the first directed edges 150, in particular for entity types 10 being connected to merged processing steps and/or gateways, parallel directly next to each other in a subway map-like way. This representation has the advantage that interrelated entity types 10 may be easily identified.

Further, processing steps may be executed several times in a sequence for one particular entity instance. Instead of representing each respective processing node of such a repetitive pattern, a loop node is generated by aggregating the respective processing nodes. This feature keeps the process graph also for real-world processes readable.

Further, a bypassing of processing steps may be indicated in the graph layout, i.e., behavior according to which an entity instance either participates in a respective processing step or not. Bypassing may be indicated, e.g., by an exclusive split gateway followed by an exclusive join gateway, wherein one of the parallel process paths comprises the respective processing node.

The graph layout introduced above enables a number of practical applications with respect to a visual analysis of the represented process graph 100 which are not achievable to a comparable extent by existing process modeling notations.

In one embodiment, a control panel is provided on the user interface which communicates the graph representation of a multi-entity process graph 100, wherein the control panel enables the user to selectively show and/or hide particular entity types, event types and entity flows. Hiding entity flows and/or event types may require aggregating the remaining event-to-entity relationships and their associated key performance indicators.

Similarly, relationships between entity instances may be directly analyzed from the graph layout. By selecting a specific entity type 10, in particular by activating the initialization node 110 of the entity type 10 to be selected, a distribution of the relationship between the specific entity instance and related entity instances may be directly determined via the respective interfaces to the edge data structures, the first data structure and the second data structure. The distribution may quantify, e.g., how many entity instances of the specific entity type are related to entity instances of the related entity type. The distribution may be communicated in a dedicated graphical user interface of the user interface, e.g., showing a bar plot, and/or summarized by an average metric.

In addition to relationships between entities, parallel behavior in the multi-entity process graph 100 may be directly analyzed visually via the graph layout. Parallelism is detected, if the particular event instances are either executed at the same or an overlapping point of time or if the event instances differ in their order of execution. In any processing behavior, all event instances are executed. By selecting a respective parallel gateway node, a distribution of the real behavior may be determined from the respective edge data structures and the second data structures and visualized by way of an additional graphical user interface of the user interface.

Further, the graph layout enables filtering of entity instances, event instances and even entity flows, throughput times, initialization and/or termination behaviors etc., which enables rich process analysis. Applying a filter setting to any node 110; 120; 130; 140 and/or directed edge 150; 160 of the process graph 100 will propagate the filter setting to related entity instances. In the example of Fig. 7, this feature enables to filter, e.g., on throughput times for the processing step "Review set of claims", in order to analyze the process behavior for related entity instances of the types "Description" and "Set of figures" in case of large versus small throughput times.

In summary, it is described above how an optimized multi-entity process model 100 may be efficiently discovered from a multi-entity data model storing process data. Further, a method to generate the optimized multi-entity process model 100 adaptively thereby enabling to find a best suiting process model for the respective use case is described. Eventually, a method to provide a graph layout that enables an interactive representation of the multi-entity process model 100 thereby overcoming limitations of existing process modeling notations.

According to a first embodiment, provided is a computer-implemented method to determine an optimized process graph representing process data. The process data is recorded during execution of processes, wherein each process is executed by executing a number of process steps. A number of entity instances participates in executing the number of process steps, wherein each entity instance is assigned to exactly one entity type and each process step is assigned to exactly one event type. The method comprises:
- providing a subset of entity types from the recorded process data,
- determining at least one event type related to entity instances of the subset of entity types,
- determining at least two subsets of entity instances and their respective frequency from the subset of entity types on basis of corresponding event types,
- storing unions of the determined subsets of entity instances in a data structure in a storage device in a predefined order,
- determining a specific union of the stored unions of subsets of entity instances, wherein the specific union maximizes a predefined utility function, and
- generating the optimized process graph by generating a process graph from the specific union of subsets of entity instances.

Preferably, the at least two subsets of entity instances and their respective frequency are determined for each entity type separately, resulting in an optimized single-entity process graph.

Preferably, the method further comprises determining the specific union by determining a process graph for at least a subset of stored unions of subsets of entity instances by way of a process discovery algorithm. The utility function assigns a cost value to each process graph based on a tradeoff between at least two parameters out of a group of parameters, the group at least consisting of:
- a complexity of the process graph,
- a coverage of the process graph,
- a precision of the process graph,
- a generalization of the process graph, and
- combinations thereof.

Preferably, the utility function is maximized by determining a specific process graph to which the utility function assigns a cost value below a predefined cost value, wherein the specific process graph is the optimized process graph.

Preferably, the predefined utility function is parametrized. The method further comprises adapting, by way of an input of a user interface, at least one parameter of the predefined utility function on basis of which an adapted specific process graph is determined, and wherein the adapted specific process graph updates the optimized process graph.

Preferably, the method further comprises:
- selecting a subset of event types from the recorded process data, and
- determining the at least one event type on basis of the selected subset of event types.

Preferably, the predefined order is an order of decreasing frequency of the determined subsets.

Preferably, the at least two subsets comprising entity instances and respective event types are determined using a clustering algorithm.

Preferably, the specific union of subsets of entity instances is determined using a direct line search algorithm.

Preferably, the direct line search algorithm is a binary search algorithm or a golden-section search algorithm.

In one embodiment, the specific union of subsets of entity instances is filtered on process steps thereby eliminating process steps without respective entity instance. Preferably, the specific union of subsets of entity instances is extended by related entity instances.

Preferably, the data structure is a linear data structure, in particular an array, in which the subsets of entity instances are stored according to the predefined order. Preferably, the method further comprises determining the optimized process graph for each provided entity type and related event type separately and merging the determined optimized process graphs into a single optimized multi-entity process graph.

According to a second embodiment, provided is a computer-implemented method to determine an optimized process graph representing process data. The process data is recorded during execution of processes, wherein each process is executed by executing a number of process steps. A number of entity instances participates in executing the number of process steps, wherein each entity instance is assigned to exactly one entity type and each process step is assigned to exactly one event type. The method comprises:
- providing a subset of entity types from the recorded process data,
- determining at least one event type related to entity instances of the subset of entity types,
- determining at least two subsets of entity instances and their respective frequency from the subset of entity types on basis of corresponding event types,
- storing unions of the determined subsets of entity instances in a data structure in a storage device in a predefined order,
- determining a specific union of the stored unions of subsets of entity instances, wherein the specific union maximizes a predefined utility function, and
- generating the optimized process graph by generating a process graph from the specific union of subsets of entity instances.

Preferably, the at least two subsets of entity instances and their respective frequency are determined for each entity type separately, resulting in an optimized single-entity process graph.

Preferably, the method further comprises determining the specific union by determining a process graph for at least a subset of stored unions of subsets of entity instances by way of a process discovery algorithm. The utility function assigns a cost value to each process graph based on a tradeoff between at least two parameters out of a group of parameters, the group at least consisting of:
- a complexity of the process graph,
- a coverage of the process graph,
- a precision of the process graph,
- a generalization of the process graph, and
- combinations thereof.

Preferably, the utility function is maximized by determining a specific process graph to which the utility function assigns a cost value below a predefined cost value, wherein the specific process graph is the optimized process graph.

Preferably, the predefined utility function is parametrized. The method further comprises adapting, by way of an input of a user interface, at least one parameter of the predefined utility function on basis of which an adapted specific process graph is determined, and wherein the adapted specific process graph updates the optimized process graph.

Preferably, the method further comprises:
- selecting a subset of event types from the recorded process data, and
- determining the at least one event type on basis of the selected subset of event types.

Preferably, the at least two subsets comprising entity instances and respective event types are determined using a clustering algorithm.

In one embodiment, the specific union of subsets of entity instances is determined using a direct line search algorithm.

Preferably, the direct line search algorithm is a binary search algorithm or a golden-section search algorithm.

Preferably, the specific union of subsets of entity instances is filtered on process steps thereby eliminating process steps without respective entity instance. Preferably, the specific union of subsets of entity instances is extended by related entity instances.

Preferably, the data structure is a linear data structure, in particular an array, in which the subsets of entity instances are stored according to the predefined order. Preferably, the method further comprises determining, for each subset of entity instances, a weight. The predefined order is then determined by finding a union of subsets of entity instances having minimal weight and covering a universe of corresponding event types. The subsets of entity instances of the union are each assigned highest priority. Each other subset of entity instances is assigned a decreasing priority value with increasing distance to the union and decreasing frequency in the recorded process data.

Preferably, the weight of each subset of entity instances is inversely proportional to the frequency of the respective subset of entity instances in the recorded process data.

Preferably, the method further comprises determining the optimized process graph for each provided entity type and related event type separately and merging the determined optimized process graphs into a single optimized multi-entity process graph.

### List of reference numerals:

- 10: entity type
- 11: entity instance
- 12: single entity instance event log
- 13: set representation of an entity instance
- 15: subset of entity instances
- 16: frequency of a subset of entity instances
- 17: weight of a subset of entity instances
- 20: list of incrementally growing event logs
- 21: union of subsets of entity instances
- 25: process discovery algorithm
- 30: process graph determined for a corresponding union of subsets
- 31: optimized process graph
- 35: utility function
- 40: cost value assigned to respective process graph
- 50: range selection input
- 51: weighting parameter
- 52: predefined range
- 60: storage device
- 100: process graph
- 110: first node
- 120: second node
- 121: label of the second node
- 122: count display of the second node
- 125: merged of second nodes
- 130: third node
- 131: virtual third node
- 140: fourth node
- 150: first directed edge
- 160: second directed edge

## Claims

1. Computer-implemented method to determine an optimized process graph representing process data, wherein the process data is recorded during execution of processes, wherein each process is executed by executing a number of process steps, wherein a number of entity instances participates in executing the number of process steps, wherein each entity instance is assigned to exactly one entity type and each process step is assigned to exactly one event type, the method comprising:
- providing a subset of entity types from the recorded process data,
- determining at least one event type related to entity instances of the subset of entity types,
- determining at least two subsets of entity instances and their respective frequency from the subset of entity types on basis of corresponding event types,
- storing unions of the determined subsets of entity instances in a data structure in a storage device in a predefined order,
- determining a specific union of the stored unions of subsets of entity instances, wherein the specific union maximizes a predefined utility function, and
- generating the optimized process graph by generating a process graph from the specific union of subsets of entity instances.

2. The method of claim 1, wherein determining the specific union by determining a process graph for at least a subset of the stored unions of subsets of entity instances by way of a process discovery algorithm, wherein the utility function assigns a cost value to each process graph based on a tradeoff between at least two parameters out of a group of parameters, the group at least consisting of:
- a complexity of the process graph,
- a coverage of the process graph,
- a precision of the process graph,
- a generalization of the process graph, and
- combinations thereof.

3. The method of claim 2, wherein the utility function is maximized by determining a specific process graph to which the utility function assigns a cost value below a predefined cost value, wherein the specific process graph is the optimized process graph.

4. The method of claim 1, wherein the predefined utility function is parametrized, wherein the method further comprises adapting, by way of an input of a user interface, at least one parameter of the predefined utility function on basis of which an adapted specific process graph is determined, and wherein the adapted specific process graph updates the optimized process graph.

5. The method of claim 1, further comprising:
- selecting a subset of event types from the recorded process data, and
- determining the at least one event type on basis of the selected subset of event types.

6. The method of claim 1, wherein the predefined order is an order of decreasing frequency of the determined subsets.

7. The method of claim 1, wherein the at least two subsets comprising entity instances and respective event types are determined using a clustering algorithm.

8. The method of claim 1, wherein the specific union of subsets of entity instances is determined using a direct line search algorithm.

9. The method of claim 8, wherein the direct line search algorithm is a binary search algorithm or a golden-section search algorithm.

10. The method of claim 1, wherein the specific union of subsets of entity instances is filtered on process steps thereby eliminating process steps without respective entity instance.

11. The method of claim 1, wherein the specific union of subsets of entity instances is extended by related entity instances.

12. The method of claim 1, wherein the data structure is a linear data structure, in particular an array, in which the subsets of entity instances are stored according to the predefined order..

13. The method of claim 1, further comprising determining, for each subset of entity instances, a weight, and wherein the predefined order is determined by finding a union of subsets of entity instances having minimal weight and covering a universe of corresponding event types, wherein the subsets of entity instances of the union are each assigned highest priority and each other subset of entity instances is assigned a decreasing priority value with increasing distance to the union and decreasing frequency in the recorded process data.

14. The method of claim 13, wherein the weight of each subset of entity instances is inversely proportional to the frequency of the respective subset of entity instances in the recorded process data.

15. The method of claim 1, further comprising determining the optimized process graph (31) for each provided entity type and related event type separately and merging the determined optimized process graphs into a single optimized multi-entity process graph (100).
